Europäisches Patentamt

European Patent Office

Office européen des brevets

(11) Veröffentlichungsnummer: **0 265 722 B1**

# EUROPÄISCHE PATENTSCHRIFT

(45) Veröffentlichungstag der Patentschrift: **08.04.92**

(21) Anmeldenummer: **87114602.3**

(22) Anmeldetag: **06.10.87**

Verbunden mit 87906575.3/0332617
(europäische
Anmeldenummer/Veröffentlichungsnummer)
durch Entscheidung vom 28.05.90.

(51) Int. Cl.5: **A21D 6/00**, A21D 15/02

(54) Verfahren und Vorrichtung zum Einfrieren von Backwaren.

(30) Priorität: **28.10.86 DE 3636713**
**02.04.87 DE 3711117**

(43) Veröffentlichungstag der Anmeldung:
**04.05.88 Patentblatt 88/18**

(45) Bekanntmachung des Hinweises auf die
Patenterteilung:
**08.04.92 Patentblatt 92/15**

(84) Benannte Vertragsstaaten:
**AT BE CH DE ES FR GB GR IT LI LU NL SE**

(56) Entgegenhaltungen:
**FR-A- 2 251 158**
**GB-A- 1 119 397**
**US-A- 4 555 410**

**Römpps Chemie Lexikon, 8. Auflage 1983, Seite 2410, Auflage 1987, Seite 3550**

**Lehrbuch der Lebensmittelchemie, 2 Auflage (1974) Seite 262, Zeilen 16-19**

**The Freezing Preservation of Foods (1968), page 390, 389**

**Lexikon Lebensmittel und Ernährung (1977), Seite 458**

(73) Patentinhaber: **Kirchhoff, Ernst**
**Buchfinkenweg 1**
**W-3050 Wunstorf 1(DE)**

(72) Erfinder: **Kirchhoff, Ernst**
**Buchfinkenweg 1**
**W-3050 Wunstorf 1(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08 20**
**W-8000 München 86(DE)**

EP 0 265 722 B1

## Beschreibung

Die Qualität von Backwaren wie Brot, Semmeln, Kuchen und Kleingebäck sowie von vorgefertigten Teigen und Halbbackwaren ändert sich sehr schnell bei der Lagerung. Die Kruste verliert an Rösche, der Kern wird zäh und das Krumengefüge wandelt sich. Saftigkeit und Elastizität der Backwaren gehen dabei verloren. Dieses als Altbacken werden bezeichnete Verhalten beruht in erster Linie auf der Retrogradation der Stärke. Aus diesem Grunde können Backwaren nicht sehr lang gelagert werden und müssen in frischem Zustand verkauft werden. Um eine Lagerung der Back- waren zu ermöglichen, wurde schon versucht, die Backwaren frisch einzufrieren und dann durch Aufbacken den frischen Zustand wieder herzustellen. Dies gelingt jedoch nur in beschränktem Maße. Während des Einfrierens und der Lagerung im tiefgekühlten Zustand verliert das Gut Feuchtigkeit, was zu einem Austrocknen der Kruste führt und beim Wiederaufbacken eine Lösung der Kruste bewirken kann. Um den Feuchtigkeitsverlust während des Einfrierens und während der Lagerung auszugleichen, wurde schon vorgeschlagen, dem Backgut Wasser zuzuführen durch Einspritzen von gesättigtem Wasserdampf in den Kern. Nachteil dieses bekannten Verfahrens ist es jedoch, daß die Kruste, deren Oberfläche der Umgebung ausgesetzt ist, Feuchtigkeit verliert, während der Kern durch die zugeführte Feuchtigkeit klebrig wird.

Aufgabe der vorliegenden Erfindung war es daher, die Nachteile des bekannten Verfahrens zu vermeiden und ein Verfahren und eine Vorrichtung zur Verfügung zu stellen, die es ermöglichen, Backwaren so einzufrieren, daß ein Qualitätsverlust praktisch nicht auftritt und die dann in aufgebackenem Zustand mit frisch gebackenen Backwaren vergleichbar sind. Weiterhin war es Aufgabe der Erfindung, einen Behälter zur Verfügung zu stellen, bei dem für die Benutzung jedesmal nur Wasser aufgefüllt werden muß, sowie ein Mittel zur Verfügung zu stellen, mit dem die erforderliche wäßrige Lösung für jede Behälterform leicht bereitet werden kann.

Diese Aufgabe wird gelöst durch ein Verfahren zum Einfrieren von Backwaren, das dadurch gekennzeichnet ist, daß man die Backwaren während des Einfrierens einer Atmosphäre erhöhter relativer Luftfeuchtigkeit aussetzt.

Es wurde überraschenderweise gefunden, daß Backwaren über einen längeren Zeitraum praktisch ohne Qualitätsverlust tiefgekühlt gelagert werden können, wenn zumindest während des Einfriervorganges die Atmosphäre, die die Backwaren umgibt, eine erhöhte relative Luftfeuchtigkeit aufweist. Die Krume kann dann beim Einfriervorgang keine Feuchtigkeit verlieren und der ursprüngliche Zustand, wie er vor dem Einfrieren vorlag, wird erhalten.

Das erfindungsgemäße Verfahren eignet sich sowohl für Fertigbackwaren als auch für vorgefertigte Teige oder vorgebackene Halbbackwaren. Unter dem hier verwendeten Begriff Backwaren sollen alle diese Produkte verstanden werden.

Zum Einfrieren werden die Backwaren einer Atmosphäre relativer erhöhter Luftfeuchtigkeit ausgesetzt. Die Luftfeuchtigkeit ist dabei erhöht gegenüber der normalen relativen Luftfeuchtigkeit, jedoch nicht so stark, daß die Kruste außen feucht oder naß wird. Die Luftfeuchtigkeit sollte so eingestellt werden, daß sich beim Einfrieren kein Reif auf den Backwaren bildet. Die für die jeweilige Backware richtige relative Luftfeuchtigkeit kann leicht in wenigen Versuchen festgestellt werden. In der Regel ist es bevorzugt, daß die Luftfeuchtigkeit beim Einfrieren etwa 80 bis 95 % beträgt.

Um eine erhöhte Luftfeuchtigkeit während des Einfriervorgangs aufrechtzuerhalten, ist es bevorzugt, das Einfrieren in einem geschlossenen Behälter durchzuführen. Die erhöhte Luftfeuchtigkeit wird dann erzeugt, indem zumindest während des Einfriervorganges, eine wäßrige Lösung, die ein gefrier punkterniedrigendes Mittel enthält, vorhanden ist. Diese wäßrige Lösung, deren Gefrierpunkt unter 0 liegt und bis unter -18°C erniedrigt sein kann, kann noch Wasser verdampfen, auch wenn der Gefrierpunkt des reinen Wassers unterschritten ist. Somit gibt diese Lösung noch während des Einfriervorganges und gegebenenfalls auch noch während der Lagerung Wasser an die Atmosphäre ab. Im günstigsten Fall wird die Luftfeuchtigkeit so eingestellt, daß sie mit der Backware im Gleichgewicht steht und die Backware weder Feuchtigkeit aufnimmt noch Feuchtigkeit abgibt.

Besonders günstig ist es, das Backgut in noch ofenwarmem Zustand in den Behälter zu geben und dann einzufrieren, da bereits beim Abkühlen Feuchtigkeit verlorengeht.

Als wäßrige Lösung zur Erhöhung der relativen Luftfeuchtigkeit wird bevorzugt eine wäßrige Lösung verwendet, die 2 bis 30, bevorzugt 5 bis 15 Gew.-% bezogen auf Wasser, Salz und/oder Zukker enthält. Eine derartige Lösung enthält keine gesundheitlich bedenklichen Inhaltstoffe und der Gefrierpunkt wird durch die Zugabe von Salz und/oder Zucker in ausreichendem Maße erniedrigt.

In einer bevorzugten Ausführungsform kann die wässrige Lösung noch zusätzlich einen Aromastoff wie Zitronen- oder Vanillearoma, enthalten. Mit der Aufnahme von Feuchtigkeit nimmt dann die Backware gleichzeitig diesen Aromastoff auf. Auf diese Weise können Aromastoffe, die beim Backen entwichen sind, beim Einfrieren, zumindest teilweise, wieder zugeführt werden oder die Backware kann noch nach dem Backen aromatisiert werden.

Gegenstand der Erfindung ist weiterhin ein Behälter zum Einfrieren von Backwaren, der dadurch gekennzeichnet ist, daß der Innenraum aus zwei Teilen besteht, die voneinander durch eine wasserdampfdurchlässige Wand getrennt sind, wobei sich in einem Teil die Backware und in dem anderen Teil eine wäßrige Lösung befindet, die ein gefrierpunkterniedrigendes Mittel enthält.

Der Behälter gemäß der Erfindung ist geeignet zur Durchführung des erfindungsgemäßen Verfahrens. Dieser Behälter ermöglicht es, Backwaren in einfacher Weise mit einfachen Mitteln einzufrieren, ohne daß eine wesentliche Qualitätsminderung auftritt. Gleichzeitig kann er auch als Transportmittel für die eingefrorenen Backwaren verwendet werden.

Bevorzugt ist der erfindungsgemäße Behälter verschließbar, besonders bevorzugt luftdicht verschließbar.

In einer bevorzugten Ausführungsform hat der erfindungsgemäße Behälter einen Innenraum, der aus einem oberen und einem unteren Teil besteht, die voneinander durch eine luft- und wasserdampfdurchlässige Auflage getrennt werden, auf die die Backwaren aufgelegt werden können, wobei sich im unteren Teil eine wäßrige Lösung befindet, die ein gefrierpunkterniedrigendes Mittel enthält.

Der erfindungsgemäße Behälter hat eine Form und Größe, die dem jeweiligen Backgut angepaßt ist. So kann der Behälter beispielsweise die Größe genormter Backbleche haben, so daß Blechkuchen in den Behälter eingelegt werden kann und zum Auftauen dann wieder entnommen und aufgebakken werden kann. Ebenso ist es möglich das Backgut in dem erfindungsgemäßen Behälter auftauen zu lassen und erst dann zu entnehmen. Oft ist ein Aufbacken dann nicht mehr nötig.

Wird ein verschließbarer Behälter verwendet, so besteht der Deckel des Behälters bevorzugt aus isolierendem Material, wie z.B. Thermopen. Die Innenseite des Deckels kühlt dann nicht so schnell ab wie der restliche Behälter. Da die feuchte Luft in dem Behälter aufsteigt und sich die Feuchtigkeit innen an dem Deckel niederschlägt, ist es günstig, wenn die Innenseite des Deckels noch nicht so kalt ist, daß das Wasser gleich gefriert und damit dem System entzogen wird. Um das Gefrieren des Wassers während des Einfriervorganges zu verhindern, ist es auch möglich, den Deckel beheizbar auszugestalten. Die Temperatur sollte dann so eingestellt werden, daß in etwa eine Temperaturdifferenz von 5°C eingehalten wird, d.h. daß der Deckel während des Einfriervorganges immer ca. 5°C wärmer ist als die Umgebung.

Erfolgt das Einfrieren in offenen Behältern in einem Kühlraum, so werden bevorzugt zwischen den einzelnen Behältern Verdampferplatten angeordnet, die aus isolierendem Material bestehen und bevorzugt beheizbar sind.

In einer weiteren Ausführunsform ist der Behälter als Froster ausgebildet. Der Behälter ist dann selbst mit Kühlaggregaten ausgestattet und kann direkt zum Einfrieren verwendet werden.

Der Innenraum des erfindungsgemäßen Behälters wird durch eine wasserdampfdurchlässige Wand in zwei Bereiche geteilt. Bevorzugt wird diese Wand als Auflage für das Gefriergut verwendet und ist dann mechanisch so stabil daß sie das aufzulegende Gefriergut tragen kann. Bevorzugt wird als Auflage ein Gitter verwendet.

Im dem einen Teil des Behälters, der durch die wasserdampfdurchlässige Wand begrenzt wird, befindet sich eine wäßrige Lösung, die ein gefrierpunkterniedrigendes Mittel enthält. Als gefrierpunkterniedrigendes Mittel wird dabei bevorzugt Salz und/oder Zucker verwendet.

Um die Handhabung des erfindungsgemäßen Behälters zu erleichtern, enthält der Teil des Behälters, der die wäßrige, ein gefrierpunkterniedrigendes Mittel enthaltende Lösung aufnehmen soll, bevorzugt ein saugfähiges Material. Als saugfähiges Material sollte dabei ein gesundheitlich unbedenkliches Material verwendet werden. Besonders geeignet ist Filterpapier oder ein Schwamm. In einer bevorzugten Ausführungsform wird die Vorrichtung bereits mit Filterpapier oder einem Schwamm versehen, die mit einer Lösung, die ein gefrierpunkterniedrigendes Mittel enthält, getränkt sind. Da bei der Verwendung der Vorrichtung durch Verdampfung nur Wasser verlorengeht, muß zur Regenerierung immer nur reines Wasser nachgefüllt werden in einer solchen Menge, daß das Filterpapier bzw. der Schwamm feucht ist. Die Vorrichtung kann dann wieder zum Einfrieren verwendet werden. Der erfindungsgemäße Behälter erlaubt daher mit technisch einfachen Mitteln das Einfrieren von Backwaren durchzuführen.

Besonders bevorzugt wird daher in den unteren Teil des Behälters ein saugfähiges Material eingelegt, das mit einer wäßrigen Lösung, die ein gefrierpunkterniedrigendes Mittel enthält, imprägniert ist. Vorteil dieser Ausführungsform ist es, daß bei Benutzung nur Wasser eingefüllt werden muß. Das erfindungsgemäß bereitgestellte saugfähige Material liefert dann das erforderliche gefrierpunkterniedrigende Mittel. Es wird daher bei Benutzung nur das saugfähige Material eingelegt, Wasser aufgefüllt und der erfindungsgemäße Behälter ist bereit zur Aufnahme und zum Einfrieren der Backwaren.

Zum Einfrieren wird in den einen Teil des Behälters die Lösung, die das gefrierpunkterniedrigende Mittel enthält, eingebracht. In den anderen Teil wird dann die Backware eingelegt und der Behälter gegebenenfalls verschlossen. Während des Einfriervorganges reichert sich die Atmosphäre in dem Behälter aus der wäßrigen Lösung, die sich in dem einen Teil befindet, mit Feuchtigkeit an. Dadurch wird der Oberfläche des Backgutes keine Feuchtigkeit entzogen. Ein derartig behandeltes Backgut kann über einen längeren Zeitraum, ohne wesentliche Qualitätsverminderung in tiefgefrorenem Zustand gelagert werden. Bei Bedarf wird das Backgut dem Behälter entnommen und in an sich bekannter Weise aufgebacken. Der Behälter kann danach, nach Zugabe von Wasser, erneut verwendet werden.

Weiterhin wird erfindungsgemäß ein saugfähiges Material zur Verfügung gestellt, das dadurch gekennzeichnet ist, daß es mit einer ein gefrierpunkterniedrigendes Mittel oder eine Mischung gefrierpunkterniedrigender Mittel enthaltenden Lösung imprägniert ist.

Als saugfähiges Material ist jedes Material geeignet, das leicht Flüssigkeit aufnehmen und wieder abgeben kann. Bevorzugt wird dazu ein Faservlies, ein Schwamm oder Filterpapier verwendet. Dieses saugfähige Material wird dann mit der entsprechenden Lösung getränkt.

Bevorzugt wird als Imprägnierlösung eine Lösung verwendet, die Zucker und/oder Salz enthält. Besonders bevorzugt wird eine Lösung verwendet, die 2 bis 15 Gew.-% Salz und/oder Zucker enthält. Anschließend wird das saugfähige Material getrocknet. Das so hergestellte saugfähige Material kann sehr leicht auf jede gewünschte Größe zurechtgeschnitten werden. Es läßt sich somit jeweils der Behälterform anpassen.

Das saugfähige Material kann gegebenenfalls nach Trocknung mehrmals wieder verwendet werden. Aus hygienischen Gründen sollte es jedoch öfters ausgetauscht werden.

Erfindungsgemäß werden ein Verfahren und eine Vorrichtung zur Verfügung gestellt, die das Einfrieren von Backwaren in einfacher Weise erlauben und trotz Lagerung zu hochwertigen Produkten führen.

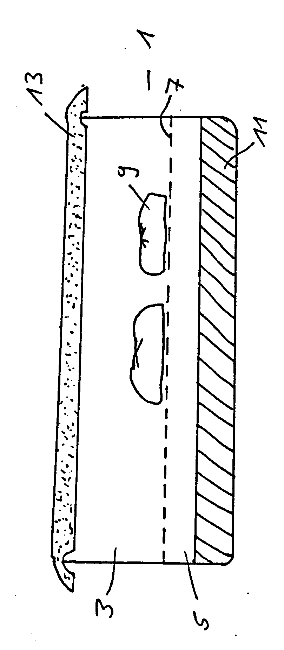

In der beigefügten Zeichnung wird eine bevorzugte Ausführungsform der erfindungsgemäßen Vorrichtung gezeigt. Fig. 1 zeigt einen Querschnitt durch einen erfindungsgemäßen Behälter.

Der Behälter 1 ist in seinem Innenraum unterteilt in einen oberen Teil 3 und einen unteren Teil 5. Der obere Teil 3 und der untere Teil 5 sind voneinander durch eine luft- und wasserdampfdurchlässige Auflage 7 getrennt. Im oberen Teil 3 des Behälters befinden sich die einzufrierenden Backwaren 9. Im unteren Teil 5 befindet sich ein Schwamm 11, der mit einer wässrigen Lösung, die ein Gefrierpunkt erniedrigendes Mittel enthält, vollgesaugt ist. Auf dem Behälter 1 befindet sich ein Deckel 13, der aus Thermopen besteht. Der Deckel 13 schließt den Behälter 1 luftdicht ab.

**Patentansprüche**

1. Verfahren zum Einfrieren von Backwaren, **dadurch gekennzeichnet,** daß man die Backwaren zumindest während des Einfriervorganges einer Atmosphäre von erhöhter relativer Luftfeuchtigkeit aussetzt, indem man sie in Gegenwart einer wäßrigen Lösung, die ein gefrierpunkterniedrigendes Mittel enthält, einfriert.

2. Verfahren nach Anspruch 1, **dadurch gekennzeichnet,** daß man die Backwaren in Gegenwart einer 2 bis 30, bevorzugt 5 bis 15 Gew.-%igen Lösung von Salz und/oder Zucker in Wasser einfriert.

3. Behälter zum Einfrieren von Backwaren, **dadurch gekennzeichnet,** daß der Innenraum aus zwei Teilen (3, 5) besteht, die voneinander durch eine wasserdampfdurchlässige Wand (7) getrennt sind, wobei sich in dem einen Teil (3) die Backware und in dem anderen Teil (5) eine wäßrige Lösung befindet, die ein gefrierpunkterniedrigendes Mittel enthält.

4. Behälter nach Anspruch 3, **dadurch gekennzeichnet,** daß sich in einem Teil des Behälters ein saugfähiges Material befindet, das die wäßrige Lösung aufnehmen kann.

5. Behälter nach Anspruch 4, **dadurch gekennzeichnet,** daß das saugfähige Material ein Schwamm oder Filterpapier ist.

6. Behälter nach Anspruch 4, **dadurch gekennzeichnet,** daß sich in dem anderen Teil (5) ein saugfähiges Material befindet, das mit einer wäßrigen Lösung, die ein gefrierpunkterniedrigendes Mittel enthält, imprägniert ist.

7. Behälter nach einem der Ansprüche 3 bis 6, **dadurch gekennzeichnet,** daß der Innenraum aus einem oberen und einem unteren Teil besteht, die voneinander durch eine luft- und wasserdampfdurchlässige Auflage getrennt sind, wobei im oberen Teil die Backwaren enthalten sein können und sich im unteren Teil eine wäßrige Lösung befindet, die ein gefrierpunkterniedrigendes Mittel enthält.

8. Behälter nach einem der Ansprüche 3 bis 7, **dadurch gekennzeichnet,**

daß der Behälter verschließbar ist und daß der Deckel aus einem isolierenden Material besteht.

9. Behälter nach Anspruch 8,
   **dadurch gekennzeichnet,**
   daß der Deckel beheizbar ist.

10. Behälter nach einem der Ansprüche 3 bis 9,
    **dadurch gekennzeichnet,**
    daß er als Froster ausgebildet ist.

**Claims**

1. Process for the freezing of baked goods, characterised in that one exposes the baked goods, at least during the freezing procedure, to an atmosphere of increased relative humidity by freezing them in the presence of an aqueous solution which contains an agent lowering the freezing point.

2. Process according to claim 1, characterised in that one freezes the baked goods in the presence of a 2 to 30, preferably 5 to 15 wt.% solution of salt and/or sugar in water.

3. Container for the freezing of baked goods, characterised in that the inner chamber consists of two parts (3, 5) which are separated from one another by a water vapour-permeable wall (7), whereby in one part (3) are present the baked goods and in the other part (5) an aqueous solution which contains an agent lowering the freezing point.

4. Container according to claim 3, characterised in that in one part of the container is present an absorbent material which can take up the aqueous solution.

5. Container according to claim 4, characterised in that the absorbent material is a sponge or filter paper.

6. Container according to claim 4 , characterised in that in the other part (5) is present an absorbent material which is impregnated with an aqueous solution which contains an agent lowering the freezing point.

7. Container according to one of claims 3 to 6, characterised in that the inner chamber consists of an upper and a lower part which are separated from one another by an air- and water vapour-permeable support, whereby the baked goods can be contained in the upper part and in the lower part is present an aqueous solution which contains an agent lowering the freezing point.

8. Container according to one of claims 3 to 7, characterised in that the container is closeable and that the cover consists of an insulating material.

9. Container according to claim 8, characterised in that the cover is heatable.

10. Container according to one of claims 3 to 9, characterised in that it is made as a froster.

**Revendications**

1. Procédé pour la congélation de produits de boulangerie, caractérisé en ce que on soumet les produits de boulangerie, du moins pendant le processus de congélation, à une atmosphère dont l'air a un taux d'humidité relativement plus élevé, et on les congèle en présence d'une solution aqueuse qui contient un agent qui abaisse le point de congélation.

2. Procédé selon la revendication 1, caractérisé en ce que l'on congèle les produits de boulangerie en présence d'une solution à 2 à 30% en poids et de préférence de 5 à 15% en poids de sel et/ou de sucre dans de l'eau.

3. Récipient pour la congélation de produits de boulangerie, caractérisé en ce que l'intérieur est constitué de deux parties (3, 5) qui sont séparées l'une de l'autre par une paroi (7) laissant passer la vapeur d'eau, les produits de boulangerie étant disposés dans une partie (3) et dans l'autre partie (5) une solution aqueuse qui contient un agent qui abaisse le point de congélation.

4. Récipient selon la revendication 3, caractérisé en ce qu'un matériau absorbant est prévu dans une partie du récipient qui peut absorber la solution aqueuse.

5. Récipient selon la revendication 4, caractérisé en ce que le matériau absorbant est une éponge ou un papier filtrant.

6. Récipient selon la revendication 4, caractérisé en ce qu'un matériau absorbant est disposé dans l'autre partie (5) et est imprégné au moyen d'une solution aqueuse qui contient un agent qui abaisse le point de congélation.

7. Récipient selon l'une des revendications 3 à 6, caractérisé en ce que l'espace interne est constitué par une partie supérieure et une partie inférieure, qui sont séparées l'une de l'autre par un support perméable à l'air et à la vapeur d'eau, les produits de boulangerie pouvant être placés dans la partie supérieure et une solution aqueuse qui contient un agent qui abaisse le point de congélation dans la partie inférieure.

8. Récipient selon l'une des revendications 3 à 7, caractérisé en ce que le récipient peut être fermé et en ce que le couvercle est constitué en un matériau isolant.

9. Récipient selon la revendication 8, caractérisé en ce que le couvercle peut être chauffé.

10. Récipient selon l'une des revendications 3 à 9, caractérisé en ce qu'il est constitué sous forme d'un congélateur.